# EUROPEAN PATENT SPECIFICATION

(11) **EP 0 262 745 B1**
(45) Date of publication and mention of the grant of the patent: **15.01.1997**
(21) Application number: 87201877.5
(22) Date of filing: 30.09.1987
(51) Int. Cl.: C08G 67/02, B01J 31/28, B01J 31/04, B01J 31/18, B01J 31/02

(54) **Polymer preparation**
Herstellung von Polymeren
Préparation de polymères

(30) Priority: 01.10.1986 NL 8602476
(43) Date of publication of application: 06.04.1988
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 121 965
- EP-A- 181 014

## Description

The invention relates to a process for the preparation of polymers as well as to novel catalyst compositions suitable for use in the preparation of these polymers.

Research made by the Applicant into high molecular weight linear polymers of carbon monoxide with one or more olefically unsaturated compounds (for the sake of brevity referred to as A), in which the monomer units occur in alternating order and which polymers therefore consist of units of the general formula [-CO-A-ʹ-], where Aʹ represents a monomer unit originating in a monomer A used, has recently led to the finding that these polymers can be prepared by using a catalyst composition based upon
a) a palladium compound,
b) an anion of a strong acid, and
c) a bidentate ligand of the general formula R₁R₂M-R-MR₃R₄, wherein M represents phosphorus, arsenic or antimony, R₁-R₄ are similar or dissimilar hydrocarbyl groups and R represents a bivalent organic bridging group containing at least two carbon atoms in the bridge.

As examples of strong acids whose anions should be present in the catalyst compositions as components b) and which lead to catalyst compositions showing attractive performance in the above-mentioned polymerization, may be mentioned, inter alia, mineral acids such as perchloric acid and sulphuric acid,sulphonic acids such as 2-hydroxy-propane-2-sulphonic acid, para-toluenesulphonic acid, methanesulphonic acid and trifluoromethanesulphonic acid and carboxylic acids such as trifluoroacetic acid, trichloroacetic acid, dichloroacetic acid and difluoroacetic acid. All these acids have pKa's of less then 2 (determined in aqueous solution at 18 °C). The catalyst composition mentioned hereinbefore may be used to carry out the polymerization at a high temperature (temperatures of 115 °C and higher) as well as at a low temperature (temperatures below 115 °C). The lower the temperature used, the lower will be the activity of the catalyst compositions. In view of the low activity that was observed when carrying out the polymerization at a high temperature by using catalyst compositions which as component b) contained an anion of a moderately strong acid with a pKa of at least 2, but less than 4, or of a weak acid with a pKa of at least 4, it was until recently assumed that only anions of strong acids with a pKa of less than 2 were eligible as the component b) in the above-mentioned catalyst compositions.

Further research into this subject has now shown that catalyst compositions containing an anion of a moderately strong acid with a pKa of at least 2 but less than 4 as the component b), exhibit attractive activites, provided that the polymerization is carried out at a low temperature. This is surprising for two reasons. In the first place, research with related catalyst compositions having as component b) an anion of a strong acid with a pKa of less than 2 has shown that reduction of the polymerization temperature leads to reduction of the activity of these catalyst compositions. In the second place, research with likewise related catalyst compositions containing as component b) an anion of a weak acid with a pKa of at least 4 has shown that these catalyst compositions exhibit low activities both at high and at low temperatures, and consequently, in contrast with the catalyst compositions containing an anion of an acid with a pKa of at least 2 but less than 4 as component b), these catalyst compositions cannot be rendered suitable for use in the present polymerization by choosing a polymerization temperature below 115 °C.

The present patent application therefore relates to a process for the preparation of polymers in which a mixture of carbon monoxide with one or more olefinically unsaturated compounds is polymerized at a temperature below 115 °C by using a catalyst composition based upon
a) a palladium compound,
b) an anion of an acid with a pKa of from 2 to 4, and
c) a bidentate ligand of the general formula R₁R₂M-R-M₃R₃R₄,
wherein R
represents phosphorus, arsenic or antimony, R₁-R₄ are similar or dissimilar hydrocarbyl groups and R represents a bivalent organic bridging group containing at least two carbon atoms in the bridge.
The patent application also relates to novel catalyst compositions based upon the afore-mentioned components a) and c) and, as component b), an anion of a carboxylic acid with a pKa of from 2 to 4.

The preferred palladium compound occuring in the catalyst composition as component a) is a palladium salt of a carboxylic acid and in particular palladium acetate.

Eligible acids with a pKa of from 2 to 4 whose anions should be present in the catalyst compositions according to the invention as component b) are both mineral acids and carboxylic acids. Examples of mineral acids, are phosphoric acid, arsenic acid, nitrous acid and selenious acid. Examples of carboxylic acids are tartaric acid, 2,5-dihydro benzoic acid, acetoacetic acid, bromo acetic acid, 2-chloro benzoic acid, α-chloro butyric acid, α-chloro propionic acid, cyano acetic acid, 2-cyano phenoxy acetic acid, mono-chloro acetic acid, glycolic acid, 2-fluoro benzoic acid, ortho-phthalic acid, 2-furan carboxylic acid, iodo acetic acid, and 2-iodo benzoic acid. Good results for instance were obtained by using catalyst compositions containing an anion of phosphoric acid, tartaric acid or 2,5-dihydro benzoic acid as component b).In the catalyst compositions component b) is preferably present in a quantity of from 0.5 to 200 and in particular of from 1.0 to 100 equivalents per gram atom of palladium. Component b) may be incorporated in the catalyst compositions in the form of an acid or in the form of a salt. Eligible salts are, among others, non-noble transition metal salts. When component b) is used as a salt of a non-noble transition metal, it is preferred that it be a copper salt. If desired, the components a) and b) may be used combined in a single compound. Examples of such compounds are palladium tartrate, palladium chloro acetate and palladium ortho-chloro benzoate.

In the bidentate ligand used as component c) M is preferably phosphorus. The hydrocarbly groups R₁-R₄ preferably contain 6 to 14 carbon atoms. Special preference is given to bidentate ligands in which the hydrocarbyl groups R₁-R₄ are phenyl groups or alkyl-substituted phenyl groups. The bivalent organic bridging group R preferably contains three carbon atoms in the bridge. Examples of suitable bidentate ligands are
1,3-bis(diphenyl-phoshino) propane,
1,3-bis[di(4-isopropyl-phenyl) phosphino] propane,
1,3-bis[di(4-methyl-phenyl)phosphino] propane and
1,3-bis[di(2-methyl-phenyl) phosphino] propane.

Favourable results were obtained for instance by using catalyst compositions containing 1,3-bis(di-phenyl-phosphino)-propane as component c). In the catalyst composition component c) is preferably present in a quantity of 0.1-3 and in particular of 0.75-2 mol per mol of palladium compound.

It is preferred in order to increase the activity of the present catalyst compositions, to incorporate a quinone as a component d). In addition to substituted or unsubstituted benzoquinones, other quinones, such as substituted or unsubstituted naphthaquinones and anthraquinones, may also be used. Preference is given to benzoquinones and in particular to 1,4-benzoquinone. The quantity in which the quinone is applied is preferably 1-10 000 and in particular 10-5000 mol per gram atom of palladium.

The polymerization by using the catalyst compositions according to the invention is preferably carried out in a liquid diluent. Very suitable liquid diluents are lower alcohols such as methanol and ethanol. If desired, the polymerization can also be carried out in the gaseous phase.

Eligible olefinically unsaturated compounds that can be polymerized with carbon monoxide with the aid of the catalyst compositions according to the invention are both compounds which consist exclusively of carbon and hydrogen and compounds which, in addition to carbon and hydrogen, comprise one or more hetero atoms. The catalyst compositions according to the invention are preferably used for the preparation of polymers of carbon monoxide with one or more olefinically unsaturated hydrocarbons. Examples of suitable hydrocarbon monomers are ethene and other α-olefins such as propene, butene-1, hexene-1 and octene-1 as well as styrene and alkyl-substituted styrenes, such as p-methyl styrene and p-ethyl styrene. The catalyst compositions according to the invention are especially very suitable for use in the preparation of copolymers of carbon monoxide with ethene and in the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used to contain 10⁻⁷-10⁻³ and in particular 10⁻⁶-10⁻⁴ gram atom of palladium.

The polymer preparation according to the invention should be carried out at a temperature below 115 °C. Preferably, the polymer preparation is performed at a temperature of 20-110 °C and a pressure of 1-200 bar and in particular at a temperature of 30-100 °C and a pressure of 20-100 bar.

In the mixture to be polymerized, the molar ratio of the olefinically unsaturated organic compounds relative to carbon monoxide is preferably 10:1-1:5 and in particular 5:1-1:2. The carbon monoxide used during the preparation of the polymers need not be pure. It may contain such contaminants as hydrogen, carbon dioxide and nitrogen.

The invention will now be illustrated with the aid of the following Examples.

### Example 1.

A stirred autoclave of 300 ml capacity was charged with a catalyst solution comprising
50 ml of methanol,
0,1 mmol of palladium acetate,
2 mmol of acetic acid (pKa = 4,75), and
0,15 mmol of 1,3-bis (diphenyl-phosphino) propane.

After air present in the autoclave had been removed by evacuation, ethene was introduced under pressure until a pressure of 30 bar was, reached followed by carbon monoxide until a pressure of 60 bar was reached. Subsequently, the contents of the autoclave were brought to 135 °C. After 15 hours the autoclave was cooled down to room temperature, followed by releasing the pressure. No more than traces of polymer material were obtained.

### Example 2

This example was carried out substantially in the same way as Example 1, except for the following differences
a) the reaction temperature was 90 °C instead of 135 °C, and
b) the reaction time was 5 hours instead of 15 hours.

Again, no more than a trace of polymer was obtained.

### Example 3

A carbon monoxide/ethene copolymer was prepared by substantially repeating Example 1, the differences being:
a) a catalyst solution was used which contained phosphoric acid (pKa = 2,12) instead of acetic acid,
b) the reaction time was 5 hours instead of 15 hours, and
c) after the pressure had been released, the polymer formed was filtered off, washed with methanol and dried in vacuo at room temperature.
0.5 g of copolymer was obtained. Thus, the polymerization rate was 10 g copolymer/g palladium/hour

### Example 4

A carbon monoxide/ethene copolymer was prepared in substantially the same way as the copolymer of Example 3, except for the following differences
a) the reaction temperature was 90 °C instead of 135°C, and
b) the reaction time was 2 1/2 hours instead of 5 hours.
11 g of copolymer was obtained. Thus, the polymerization rate was 440 g copolymer/g palladium/hour.

Of Examples 1-4, Examples 4 is an example according to the invention. In this example, polymer was prepared at a temperature below 115 °C, using catalyst compositions according to the invention which contained an anion of an acid with a pKa of between 2 and 4 as the component b). Examples 1 and 2 in which catalyst compositions were used which contained an anion of an acid with a pKa of more than 4 as the component b) and Example 3 in which the polymerization was carried out at a temperature above 115 °C fall outside the scope of the invention. They have been included in the patent application for comparison. The carbon monoxide/ethene copolymers prepared according to Example 4 had a melting point of 257 °C With the aid of ¹³C-NMR analysis it was established that these polymers had a linear alternating structure and therefore consisted of units of the formula, -CO-(C₂H₄)-.

## Claims

1. Process for the preparation of polymers, in which a mixture of carbon monoxide with one or more olefinically unsaturated compounds is polymerised at elevated temperature by using a catalyst composition based upon
a) a palladium compound,
b) an anion of an acid, and
c) a bidentate ligand of the general formula R₁R₂M-R-MR₃R₄, wherein M represents phosphorus, arsenic or antimony, R₁, R₂, R₃ and R₄ are hydrocarbyl groups, and R represents a bivalent organic bridging group containing at least two carbon atoms in the bridge,
**characterised in that** the acid has a pKa of from 2 to 4, and that the polymerisation is carried out at a temperature below 115 °C.

2. Process as claimed in claim 1, characterized in that the catalyst composition is based upon an anion of an acid chosen from the group made up of phosphoric acid, tartaric acid and 2,5-dihydroxy benzoic acid as component b).

3. Process as claimed in claims 1 or 2,characterized in that component b) is incorporated in the catalyst composition in the form of an acid or in the form of a non-noble transition metal salt, such as a copper salt.

4. Process as claimed in one or more of claims 1-3, characterized in that as component c) the catalyst composition contains a compound with M in the general formula representing phosporus, with R₁, R₂, R₃ and R₄ being phenyl groups or alkyl-substituted phenyl groups and with the bivalent organic bridging group R containing three carbon atoms in the bridge, such as 1,3-bis(diphenyl-phosphino) propane.

5. Process as claimed in one or more of claims 1-4, characterized in that the olefinically unsaturated compounds used are hydrocarbons, such as ethene or a mixture of ethene with another olefinically unsaturated hydrocarbon, such as propene.

6. Process as claimed in claim 5, characterized in that it is carried out at a temperature of 30-100 °C and a pressure of 20-100 bar.

## Patentansprüche

1. Verfahren zur Herstellung von Polymeren, bei dem man ein Gemisch aus Kohlenmonoxid und einer oder mehreren olefinisch ungesättigten Verbindungen bei erhöhter Temperatur unter Verwendung einer Katalysatorzusammensetzung, die auf
a) einer Palladiumverbindung,
b) einem Anion einer Säure und
c) einem zweizähnigen Liganden der allgemeinen Formel R₁R₂M-R-MR₃R₄, worin M für Phosphor, Arsen oder Antimon steht, R₁, R₂, R₃ und R₄ Kohlenwasserstoffgruppen bedeuten und R für eine zweizähnige organische Brückengruppe mit mindestens zwei Kohlenstoffatomen in der Brücke steht,
basiert, polymerisiert,
dadurch gekennzeichnet, daß die Säure einen pKa-Wert von 2 bis 4 aufweist und man die Polymerisation bei einer Temperatur unter 115°C durchführt.

2. Verfahren nach Anspruch 1, dadurch gekennzeichnet, daß die Katalysatorzusammensetzung auf einem Anion einer Säure, ausgewählt aus der Gruppe bestehend aus Phosphorsäure, Weinsäure und 2,5-Dihydroxybenzoesäure, als Komponente b) basiert.

3. Verfahren nach Anspruch 1 oder 2, dadurch gekennzeichnet, daß man die Komponente b) in Form einer Säure oder in Form eines Salzes eines unedlen Übergangsmetalls, wie z.B. eines Kupfersalzes, in die Katalysatorzusammensetzung einarbeitet.

4. Verfahren nach einem oder mehreren der Ansprüche 1-3, dadurch gekennzeichnet, daß die Katalysatorzusammensetzung als Komponente c) eine Verbindung enthält, in der M in der allgemeinen Formel für Phosphor steht, R₁, R₂, R₃ und R₄ gegebenenfalls alkylsubstituierte Phenylgruppen bedeuten und die zweiwertige organische Brückengruppe R drei Kohlenstoffatome in der Brücke enthält, wie z.B. 1,3-Bis(diphenylphosphino)propan.

5. Verfahren nach einem oder mehreren der Ansprüche 1-4, dadurch gekennzeichnet, daß man als olefinisch ungesättigte Verbindungen Kohlenwasserstoffe, wie z.B. Ethen oder ein Gemisch aus Ethen und einem anderen olefinisch ungesättigten Kohlenwasserstoff, wie z.B. Propen, einsetzt.

6. Verfahren nach Anspruch 5, dadurch gekennzeichnet, daß man es bei einer Temperatur von 30-100°C und einem Druck von 20-100 bar durchführt.

## Revendications

1. Procédé de préparation de polymères, dans lequel un mélange de monoxyde de carbone avec un ou plusieurs composés à insaturation oléfinique est polymérisé à une température élevée, grâce à l'utilisation d'une composition de catalyseur à base
a) d'un composé de palladium,
b) d'un anion d'un acide, et
c) d'un ligand bidenté de formule générale R₁R₂M-R-MR₃R₄, dans laquelle M représente un atome de phosphore, d'arsenic ou d'antimoine, R₁, R₂, R₃ et R₄ sont des groupes hydrocarbyle et R représente un groupe pontant organique bivalent contenant au moins deux atomes de carbone dans le pont,
caractérisé en ce que l'acide possède un pKa de 2 à 4, et en ce que la polymérisation est réalisée à une température inférieure à 115°C.

2. Procédé selon la revendication 1, caractérisé en ce que la composition de catalyseur est à base d'un anion d'un acide choisi dans le groupe composé de l'acide phosphorique, l'acide tartrique et l'acide 2,5-dihydroxybenzoïque, comme constituant b).

3. Procédé selon la revendication 1 ou 2, caractérisé en ce que le constituant b) est incorporé dans la composition de catalyseur sous la forme d'un acide ou sous la forme d'un sel d'un métal de transition non noble, tel qu'un sel de cuivre.

4. Procédé selon l'une quelconque des revendications 1-3, caractérisé en ce que, comme constituant c), la composition de catalyseur contient un composé dont M, dans la formule générale, représente un atome de phosphore, R₁, R₂, R₃ et R₄ étant des groupes phényle ou des groupes phényle alkyl-substitués, et dont le groupe pontant organique bivalent R contient trois atomes de carbone dans le pont, tel que le 1,3-bis(diphénylphosphino)propane.

5. Procédé selon l'une quelconque des revendications 1-4, caractérisé en ce que les composés à insaturation oléfinique utilisés sont des hydrocarbures, tels que l'éthène, ou un mélange d'éthène avec un autre hydrocarbure à insaturation oléfinique, tel que le propène.

6. Procédé selon la revendication 5, caractérisé en ce qu'il est mis en oeuvre à une température de 30-100°C et sous une pression de 20-100 bars.
